# EUROPÄISCHE PATENTANMELDUNG

(11) **EP 2 966 205 A2**
(43) Veröffentlichungstag der Anmeldung: **13.01.2016**
(21) Anmeldenummer: 15175435.5
(22) Anmeldetag: 06.07.2015
(51) Int. Cl.: D04B 15/78, D04B 15/66, D04B 15/99

(54) **RUNDSTRICKMASCHINE MIT EINER MASCHINENSTEUERUNGSEINRICHTUNG**

(30) Priorität: 10.07.2014 DE 102014109659
(71) Anmelder: SIPRA Patententwicklungs- und Beteiligungsgesellschaft mbH, 72461 Albstadt (DE)
(72) Erfinder: DZIADOSZ, Thomas, 72336 Balingen (DE); KENNERKNECHT, Timo, 72461 Albstadt (DE); STEINBERGER, Alexander, 72461 Albstadt (DE); VENNEMANN, Joseph, 78595 Hausen ob Verena (DE); BAUER, Wolfgang, Dr., 70806 Kornwestheim (DE)
(74) Vertreter: Kohler Schmid Möbus Patentanwälte

(57) **Zusammenfassung**

Eine Rundstrickmaschine mit einer Maschinensteuerungseinrichtung, die eine Schnittstelle zum drahtlosen und/oder drahtgebundenen Anschließen mobiler Eingabegeräte aufweist.

## Beschreibung

Rundstrickmaschinen sind mit einer Maschinensteuerungseinrichtung ausgerüstet, die über eine Bedieneinrichtung mit einem Display und einer Tastatur oder einem Touchscreen bedient werden kann. Die Bedieneinrichtung ist über Kabel mit der Maschinensteuerungseinrichtung verbunden. Für die Bedienung der Maschinensteuerungseinrichtung ist daher ein relativ hoher Hard- und Softwareaufwand erforderlich.

Aus der US 6,931,299 B2 ist eine Mikro-Kontrolleinrichtung für eine Rundstrickmaschine bekannt, welche die Funktionen einer Eingabeeinrichtung, einer Kommunikationseinrichtung und einer Steuereinrichtung vereinigt. Die Eingabe erfolgt über einen Touchscreen, der über Kabel mit der Mikro-Kontrolleinrichtung verbunden ist. Der Touchscreen ist fester Bestandteil der Strickmaschine. Die Mikro-Kontrolleinrichtung ist über eine RS485-Schnittstelle mit der Rundstrickmaschine verbunden. Durch die Integration verschiedener Funktionen in die Mikro-Kontrolleinrichtung können die Ansprechzeiten der Steuerung verkürzt werden.

Die vorliegende Erfindung soll eine Rundstrickmaschine mit einer vereinfachten und kostengünstigeren Bedienung der Maschinensteuerung bereitstellen.

Die Aufgabe wird gelöst durch eine Rundstrickmaschine mit einer Maschinensteuerungseinrichtung, die eine Schnittstelle zum drahtlosen und/oder drahtgebundenen Anschließen mobiler Eingabegeräte aufweist. Die Schnittstelle kann dabei auch an einer intelligenten Einheit, die mit der Maschinensteuerungseinrichtung verbunden werden kann, angeordnet sein.

Bei der erfindungsgemäßen Rundstrickmaschine ist das Eingabegerät nicht mehr fester Bestandteil der Maschine. Dadurch können mit einem einzigen mobilen Eingabegerät mehrere erfindungsgemäße Rundstrickmaschinen angesteuert werden. Bei den Rundstrickmaschinen kann auf das Vorsehen einer Bedieneinrichtung verzichtet werden. Es muss lediglich die Schnittstelle für die Eingabegeräte bereitgestellt werden. Dadurch lassen sich deutliche Einsparungen bei der Herstellung der Maschine erzielen. Besonders vorteilhaft ist es, wenn die mobilen Eingabegeräte Smart-Mobiltelefone, Tablet-Computer und/oder Laptop-Computer sind. Es können dann handelsübliche Geräte für die Bedienung und Ansteuerung der Maschine eingesetzt werden. Diese Geräte sind außerdem klein und leicht von einer Bedienperson mitzuführen.

Vorzugsweise kann die Schnittstelle zum drahtlosen Anschließen der Eingabegeräte eine Bluetooth-, WLAN- und/oder NFC-Kommunikationseinrichtung aufweisen. Die drahtlose Bedienung der Maschinensteuerung ist besonders rasch und bequem durchzuführen. Drahtlose Kommunikationseinrichtungen erlauben außerdem eine sehr große Freiheit bei der Wahl der Eingabegeräte.

Aus Sicherheitsgründen ist es dabei zweckmäßig, dass die drahtlosen Kommunikationseinrichtungen eine Reichweite von kleiner oder gleich 2,5 m aufweisen. Die Maschine kann dadurch nur aus Sichtweite angesteuert werden. Eventuell auftretende Funktionsprobleme werden sofort erkannt.

Zusätzlich oder alternativ zu drahtlosen Kommunikationseinrichtungen kann die Schnittstelle auch eine Dockingstation für die Eingabegeräte aufweisen. Über die Dockingstation entsteht eine feste elektrische Verbindung zwischen dem Eingabegerät und der Rundstrickmaschine, die durch einfaches Einsetzen des Eingabegeräts in die Dockingstation hergestellt wird.

Eine weitere Möglichkeit, eine feste elektrische Verbindung zwischen den mobilen Eingabegeräten und der Rundstrickmaschine herzustellen, besteht darin, die Schnittstelle mit mindestens einem USB-Anschluss, CAN-Anschluss, Ethernet-Anschluss und/oder RS232-Anschluss auszustatten.

Die Eingabegeräte werden hier mit Kabeln mit den entsprechenden Anschlüssen verbunden. Während eine Dockingstation den Einsatz eines spezifischen Eingabegerätes erfordert, können über die Steckanschlüsse verschiedene Typen von Eingabegeräten eingesetzt werden.

Aus Sicherheitsgründen ist es weiter vorteilhaft, wenn der Zugang zur Schnittstelle passwortgeschützt ist. Eine Bedienung der Maschine durch unbefugte Personen kann dadurch ausgeschlossen werden.

Um zu vermeiden, dass mehrere Rundstrickmaschinen gleichzeitig angesteuert werden, kann die Schnittstelle über einen Zugangscode ansteuerbar sein. Zur Ansteuerung der Rundstrickmaschine kann dabei auch eine herstellerspezifische App auf die Eingabegeräte geladen werden.

Bei der erfindungsgemäßen Rundstrickmaschine werden die Funktionen "Bedienung" und "Kommunikation" der Ansteuerung auf externe, handelsübliche, intelligente Eingabegeräte ausgelagert. An der Maschine muss lediglich eine geeignete Schnittstelle vorgesehen werden. Die eigentliche Maschinensteuerung kann beispielsweise über einen Mikrokontroller erfolgen.

## Patentansprüche

1. Rundstrickmaschine mit einer Maschinensteuerungseinrichtung, die eine Schnittstelle zum drahtlosen und/oder drahtgebundenen Anschließen mobiler Eingabegeräte aufweist.

2. Rundstrickmaschine nach Anspruch 1, **dadurch gekennzeichnet, dass** die Eingabegeräte Smart-Mobiltelefone, Tablet-Computer und/oder Laptop-Computer sind.

3. Rundstrickmaschine nach Anspruch 1 oder 2, **dadurch gekennzeichnet, dass** die Schnittstelle zum drahtlosen Anschließen der Eingabegeräte eine Bluetooth-, WLAN- und/oder NFC-Kommunikationseinrichtung aufweist.

4. Rundstrickmaschine nach Anspruch 3, **dadurch gekennzeichnet, dass** die drahtlosen Kommunikationseinrichtungen eine Reichweite von kleiner oder gleich 2,5 m aufweisen.

5. Rundstrickmaschine nach einem der vorhergehenden Ansprüche, **dadurch gekennzeichnet, dass** die Schnittstelle eine Dockingstation für die Eingabegeräte aufweist.

6. Rundstrickmaschine nach einem der vorhergehenden Ansprüche, **dadurch gekennzeichnet, dass** die Schnittstelle mindestens einen USB-Anschluss, CAN-Anschluss, Ethernet-Anschluss und/oder RS232-Anschluss aufweist.

7. Rundstrickmaschine nach einem der vorhergehenden Ansprüche, **dadurch gekennzeichnet, dass** der Zugang zur Schnittstelle passwortgeschützt ist.

8. Rundstrickmaschine nach einem der vorhergehenden Ansprüche, **dadurch gekennzeichnet, dass** die Schnittstelle über einen Zugangscode ansteuerbar ist.
